# EUROPÄISCHE PATENTSCHRIFT

(11) **EP 1 866 551 B1**
(45) Veröffentlichungstag und Bekanntmachung des Hinweises auf die Patenterteilung: **28.09.2016**
(21) Anmeldenummer: 06725614.9
(22) Anmeldetag: 06.04.2006
(51) Int. Cl.: F16B 13/14

(54) **VERBINDUNGSEINSATZ**
CONNECTION INSERT
INSERT D'ASSEMBLAGE

(30) Priorität: 07.04.2005 DE 202005005579 U
(43) Veröffentlichungstag der Anmeldung: 19.12.2007
(73) Patentinhaber: Hettich-Heinze GmbH & Co. KG, 32139 Spenge (DE)
(72) Erfinder: SCHAEL, Oliver, 32278 Kirchlengern (DE); DINCDEMIR, Eyyahi, 32051 Herford (DE)
(74) Vertreter: Dantz, Jan Henning
(86) Internationale Anmeldenummer: PCT/EP2006/061394
(87) Internationale Veröffentlichungsnummer: WO 2006/106131

(56) Entgegenhaltungen:
- DE-A1- 2 515 950
- DE-B1- 2 423 433
- FR-A- 2 701 071
- US-A- 4 063 582

## Beschreibung

Die Erfindung betrifft eine Anordnung mit einer Leichtbauplatte und einem Verbindungseinsatz gemäß dem Oberbegriff des Anspruches 1.

Dieser Verbindungseinsatz dient zur Befestigung von Bauteilen an Platten, wobei diese Platten einen weichen Innenkern und harte Deckplatten aufweisen. Diese Platten werden allgemein als Leichtbauplatten bezeichnet. Der Verbindungseinsatz ist mit einem zentrischen Klebstoffzuführkanal und mit quer dazu stehenden Austrittsöffnungen für den Klebstoff versehen. Die in Rede stehenden plattenförmigen Bauteile werden in bevorzugter Ausführung unter anderem zur Herstellung von Möbeln verwendet werden. Die Verbindungseinsätze dienen der Klebstoffführung in der Form, dass der Klebstoff zu den Verbindungseinsätzen gelangt und diese eine feste Verbindung mit den festen Bereichen der Platten eingehen. Es ist jedoch auch möglich, dass die Endbereiche der Verbindungseinsätze in Bohrungen oder Ausnehmungen der plattenförmigen Bauteile eingesetzt werden, so dass sie die Klebeverbindung unterstützen.

Nachteilig bei den vorbekannten Verbindungseinsätzen ist, dass die Klebstoffführung nicht exakt vorgegeben ist, so dass es immer wieder passiert, dass der Klebstoff nicht zu der Stelle gelangt, an der die eigentliche Klebeverbindung erfolgen soll. Eine exakte Führung ist jedoch notwendig, da Klebstoffe als zähfließend anzusehen sind, das heißt, die Viskosität ist relativ hoch.

In der FR-A-2 701 071 ist ein Verbindungseinsatz, der dort das Bezugszeichen 2 trägt, gezeigt und der in eine Bohrung eines Bauteiles eintreibbar ist und über den gesamten Bereich seiner Mantelfläche mittels eines Klebers in der Bohrung festlegbar ist. Um Kleber in den Bereich zwischen dem Innendurchmesser der Bohrung und dem Außenbereich des Verbindungseinsatzes bringen zu können, ist eine Hilfsvorrichtung vorgesehen, die auf das obere Ende des Verbindungseinsatzes aufsetzbar und als Verteilereinrichtung für einzubringenden Klebstoff oder ein anderes Füllmaterial dient.

Die Verklebung des Verbindungseinsatzes mit einer Platte erfolgt, wie aus der genannten Druckschrift eindeutig hervorgeht, im Umfangsbereich zwischen dem Schaft des Verbindungseinsatzes und der diesen Schaft umgebenden Lochlaibung der Bohrung, in welche der Verbindungseinsatz eingeführt ist.

Das gleiche gilt für einen Verbindungseinsatz gemäß der US-A-4 063 582, welcher im prinzipiellen Aufbau praktisch identisch ist mit einem Verbindungseinsatz gemäß der FR-A-2 701 071.

In beiden Fällen sind die Bauteile zur Einfüllung von Bindemitteln nicht konstruktiver Bestandteil des Verbindungseinsatzes, sondern lediglich notwendige Hilfsmittel zum Einbringen eines Bindemittels in den Bereich der Außenumfangsfläche des jeweiligen Verbindungseinsatzes.

Der Einsatz der vorgenannten bekannten Verbindungseinsätze ist somit mit den gleichen Nachteilen behaftet wie bereits oben beschrieben.

Aus der DE 25 15 950 A1ist eine Befestigungseinheit bekannt geworden, die aus einem Dübel 5 und aus einem in den Dübel 5 einbringbaren Befestigungselement 6 besteht, wobei das Befestigungselement 6 letztendlich eine Befestigungsschraube ist. Hierbei wird eine Befestigungsschraube bzw. ein Befestigungselement 6 verwendet, welches einen Einführkanal für ein Haftmittel aufweist. Auch der Dübel 5 ist mit Austrittsöffnungen versehen, durch welche das Haftmittel in den Lochlaibungsbereich der Bohrung gelangen kann, in welches der Dübel eingesetzt ist.

Abgesehen davon, dass der zuletzt genannte Befestigungseinsatz für Wände oder Decken von Gebäuden vorgesehen ist und insoweit die Druckschrift als gattungsfremd bezeichnet werden kann, würde deren Konstruktionsprinzip die gleichen Nachteile aufweisen wie die vorstehend beschriebenen bekannten Befestigungseinsätze und darüber hinaus auch noch den Nachteil aufweisen, dass eine Befestigungsschraube mit einem Klebstoffzuführkanal und quer dazu verlaufenden Austrittsöffnungen verwendet werden müsste.

Der Erfindung liegt die Aufgabe zugrunde, eine Anordnung mit einer Leichtbauplatte und einem Verbindungseinsatz der eingangs näher beschriebenen Art so zu gestalten, dass eine exakte Führung des eingespritzten Klebstoffes sichergestellt ist, so dass die Klebeverbindungen an den vorgegebenen Stellen erfolgen.

Die gestellte Aufgabe wird gelöst durch die Merkmale des Anspruchs 1.

Der Klebstoff wird von einer Stirnseite her in den Verbindungseinsatz mittels eines geeigneten Gerätes eingebracht. Die Außenfläche des Innenteiles und die Innenfläche der Außenhülse können so gestaltet werden, dass eine gezielte Klebstoffführung möglich ist. Insbesondere die Außenhülse kann je nach dem Verwendungszweck gestaltet werden, so dass gezielte Klebeverbindungen erreicht werden. Da sie die Verteilung des Klebstoffes bewirkt, könnte sie auch als Verteilerhülse oder Klebstoffführungshülse bezeichnet werde.

In der einfachsten Ausführung besteht der erfindungsgemäße Verbindungseinsatz ausschließlich aus dem Innenteil und der Außenhülse. Dabei ist dann vorgesehen, dass zwischen der Innenfläche der Außenhülse und der Außenfläche des Innenteils ein Ringspalt angeordnet ist.

Zur Unterstützung der Klebeverbindung zwischen dem Verbindungseinsatz und dem angrenzenden Bauteil, beispielsweise an einer Platte, ist vorgesehen, dass das Innenteil zumindest an einem Ende einen Kopf aufweist, der zumindest teilweise form- und/oder kraftschlüssig in eine Bohrung oder in eine Ausnehmung des Bauteils einsetzbar ist. Die Verbindung des Kopfes des Innenteils mit dem Bauteil kann in besonders einfacher Weise dadurch erfolgen, dass die Umfangsfläche des Kopfes profiliert ist, so dass sich die erhabenen Teile in das die Bohrung oder die Ausnehmung begrenzende Material einformen. Dies ist möglich, da die in Rede stehenden Bauteile aus Holz oder einem holzartigen Werkstoff bestehen. Die Profilierung der Umfangsfläche kann in besonders vorteilhafter Weise durch Harpunenstege gebildet sein, so dass das Innenteil in einer Richtung in die Bohrung oder in die Aussparung eingedrückt werden kann, dass jedoch ein Herausziehen in der entgegengesetzten Richtung nur durch Zerstörung der die Bohrung oder die Aussparung begrenzenden Materialteile möglich ist. Die im Abstand zueinander verlaufenden Harpunenstege können umlaufend an den Kopf des Innenteils angeformt sein, sie können sich auch über bestimmte Teilbereiche des Umfangs erstrecken oder sie können auch in Richtung der Mittellängsachse des Innenteils verlaufen, so dass bei der letzteren Ausführung sinngemäß eine Verdrehsicherung gebildet wird.

Zur Verklebung des Kopfes des Innenteiles mit den die Bohrung oder die Ausnehmung begrenzenden Flächen ist vorgesehen, dass der Kopf des Innenteils mit wenigstens einer, vorzugsweise mit zwei diametral einander gegenüberliegenden Klebstoffaustrittsöffnungen versehen ist. Die Klebstoffaustrittsöffnung bzw. die Klebstoffaustrittsöffnungen sind zweckmäßigerweise schlitzartig gestaltet sowie in Längsachsrichtung des Innenteils verlaufend.

Damit auch eine Verklebung über die gesamte Länge des Schaftes des Innenteils möglich ist, ist vorgesehen, dass das Innenteil an der Umfangsfläche mehrere im Abstand zueinander verlaufende Radialnuten aufweist. Damit darin auch Klebstoff eindringen kann, ist vorgesehen, dass das Innenteil außerhalb des Kopfes mit wenigstens einer Klebstoffaustrittsöffnung, vorzugsweise jedoch mit zwei einander diametral gegenüberliegenden Klebstoffaustrittsöffnungen versehen ist. Durch jede Klebstoffaustrittsöffnung gelangt dann der Klebstoff in den Ringspalt zwischen der Außenfläche des Innenteils und der Innenfläche der Außenhülse. Damit der Klebstoff auch in die Endbereiche des Schaftes des Innenteiles gelangt, ist vorgesehen, dass jede Klebstoffaustrittsöffnung im mittleren Bereich des Schaftes angeordnet ist.

Der Klebstoff kann nur von einer Stirnseite in den Klebstoffzuführkanal des Innenteils eingepresst werden. Damit die Menge des in diesem Kanal verbleibenden Klebstoffes begrenzt ist, ist vorgesehen, dass der Klebstoffzuführkanal in zwei Abschnitte unterteilt ist, und dass nur ein Abschnitt sich bis in den Bereich der Klebstoffaustrittsöffnungen erstreckt. Zur Sicherung der Außenhülse ist vorgesehen, dass das Innenteil an der dem Kopf abgewandten Seite mit einem Sicherungsring versehen ist, der so ausgelegt ist, dass durch Einwirkung einer Druckkraft eine solche Verformung erfolgt, dass die Außenhülse auf das Innenteil gestülpt werden kann. Außerdem erfolgt eine seitliche Verteilung des Klebstoffes, damit der Klebstoff sich über die gesamte Länge bzw. Höhe des Schaftes des Innenteils und auch über die Innenfläche des Außenteils verteilen kann, ist vorgesehen, dass die Innenfläche der Außenhülse als Profilierung ausgebildet ist, die aus in Längsrichtung verlaufenden Vertiefungen und Erhöhungen gebildet ist, oder anders ausgedrückt, die Erhöhungen und Vertiefungen verlaufen quer zu den Radialnuten des Schaftes des Innenteils.

Es ist ferner noch vorgesehen, dass die Außenhülse in dem dem Kopf des Innenteils zugewandten Endbereich mit mehreren Schlitzen versehen ist, um das Zusammenfügen bzw. das Zusammenclipsen des Innenteils mit der Außenhülse zu erleichtern. Ferner tritt bei der Zuführung von Klebstoff dieser aus den Schlitzen aus, so dass die Klebeverbindung positiv beeinflusst wird.

Die Klebstoffzufuhr erfolgt üblicherweise durch Druck. Insbesondere die Außenhülse könnte als Klebstoffführungselement bezeichnet werden, so dass gezielt der Klebstoff in die Endbereiche gedrückt wird. Nach Abbau dieses Druckes könnte es passieren, dass der Klebstoff in den mittleren Bereich der Außenhülse zurückfließt. Um dies zu verhindern, ist vorgesehen, dass die Außenhülse an der Außenfläche zumindest in den Endbereichen mit flexiblen Rückhaltelementen für den Klebstoff versehen ist. Diese Rückhalteelemente sind dann so gestaltet, dass sie sinngemäß ein Widerlager bilden. Die Rückhalteelemente können verschiedenartig angeordnet sein. So ist vorgesehen, dass sie in dem der Außenfläche der Außenhülse zugewandten Endbereichen radial oder tangential zur Außenfläche der Außenhülse verlaufen. Obwohl es ausreichend ist, wenn die Rückhalteelemente in den Endbereichen angeordnet sind, ist vorgesehen, dass sie bei einer anderen Ausführung radial zur Mittellängsachse der Außenhülse angeordnet sind und sich über die gesamte oder annähernd die gesamte Länge der Außenhülse erstrecken. Dabei ist dann vorgesehen, dass die Längen der Rückhaltelemente sich vom mittleren Bereich zu den Endbereichen der Außenhülse vergrößern, vorzugsweise kontinuierlich vergrößern. Dadurch wird sinngemäß, bezogen auf den Längsschnitt, eine als konkav anzusehende Außenkontur geschaffen. Die Rückhalteelemente sind zweckmäßigerweise als Borsten, Streifen oder dergleichen ausgebildet.

Ferner ist noch vorgesehen, dass der Klebstoffzuführkanal im Endbereich ein Sieb oder eine Lochplatte aufweist, um einerseits die Klebstoffmenge zu dosieren und um andererseits zu verhindern, dass Fremdkörper in den Klebstoffzuführkanal eindringen. Je nach Verwendungszweck kann es auch zweckmäßig sein, dass die Außenhülse mit mehreren Öffnungen versehen ist, die kreisrund oder eine von der Kreisform abweichende Konfiguration aufweisen.

Das Einsatzgebiet des Verbindungseinsatzes ist vielfältig. So ist vorgesehen, dass das Außen- und das Innenteil jeweils topfförmig ausgebildet sind, und dass der Verbindungseinsatz mittels eines allgemein bekannten Exzenterbeschlages an einem Möbelbauteil oder einer Möbelplatte festlegbar ist.

Der Verbindungseinsatz könnte als Dübel bezeichnet werden, um beispielsweise mittels einer Schraube Beschläge oder dergleichen zu befestigen.

Anhand der beiliegenden Zeichnungen wird die Erfindung noch näher erläutert. Es zeigen:
- Figur 1: das Innenteil und die Außenhülse des erfindungsgemäßen Verbindungseinsatzes als Einzelheit im auseinandergezogenen Zustand sowie in perspektivischer Darstellung;
- Figur 2: das Innenteil im Aufriss;
- Figur 3: das Innenteil in Schnittdarstellung;
- Figur 4: ein zwischen zwei Deckschichten angeordneter Verbindungseinsatz in einer ersten Ausführung;
- Figur 5: ein zwischen zwei Deckschichten angeordneter Verbindungseinsatz in einer zweiten Ausführung;
- Figur 6: der zwischen zwei beabstandeten Deckschichten der Platten angeordnete Verbindungseinsatz in einer aufgeschnitten Darstellung;
- Figur 7: der erfindungsgemäße Verbindungseinsatz in Kombination mit einem Exzenterbeschlag;
- Figuren 8 bis 10: den mit Rückhalteelementen ausgestatteten Verbindungseinsatz in drei verschiedenen Ausführungen und
- Figur 11: eine Schnittdarstellung eines Verbindungseinsatzes nach einem weiteren Ausführungsbeispiel der Erfindung.

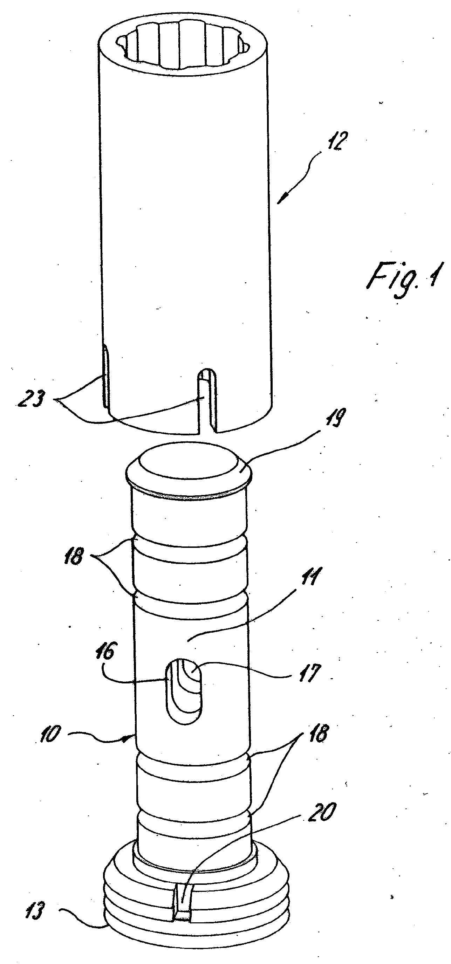

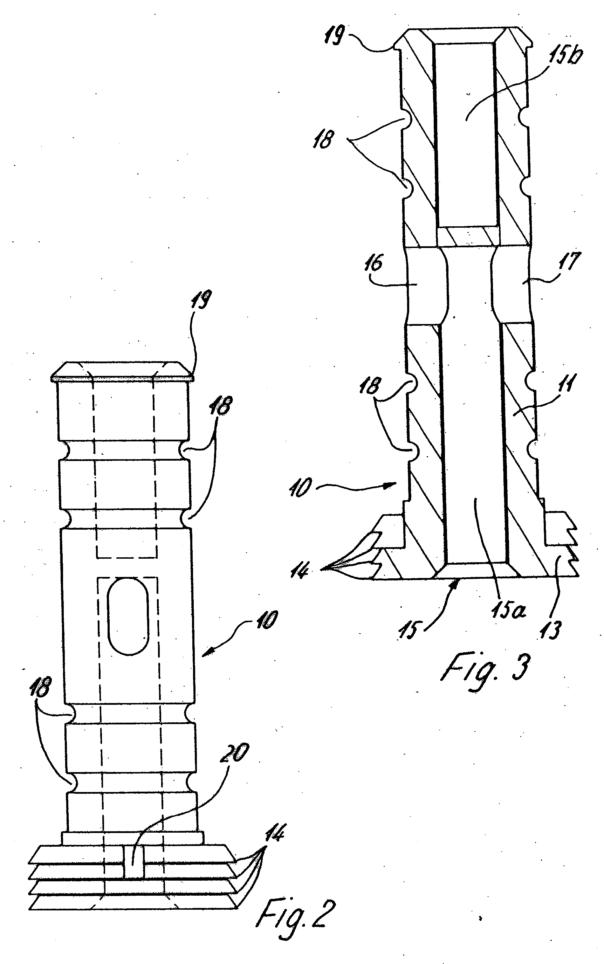

Der in den Figuren 1 bis 7 dargestellte Verbindungseinsatz besteht aus einem noch näher erläuterten Innenteil 10 und einer auf den Schaft 11 des Innenteils 10 aufsteckbaren Außenhülse 12, die ebenfalls noch näher erläutert wird. Das Innenteil 10 ist noch an einem Ende mit einem Kopf 13 ausgestattet, dessen Umfangsfläche profiliert ist. Diese Profilierung besteht aus mehreren Harpunenstegen 14, wie besonders aus den Figuren 2 und 3 erkennbar ist. Das Innenteil 10 ist mit einem Klebstoffzuführkanal 15 versehen, der aus zwei Abschnitten 15a und 15b besteht. Wie insbesondere die Figur 3 zeigt, sind die beiden Abschnitte 15a, 15b des Klebstoffzuführkanals 15 durch eine Wand voneinander getrennt. Das rohrförmige Innenteil 10 ist außerdem mit zwei einander diametral gegenüberliegenden Klebstoffaustrittsöffnungen 16, 17 versehen. Diese sind langlochförmig gestaltet und so angeordnet, dass ausschließlich Klebstoff aus dem Abschnitt 15a nach außen dringen kann.

Wie die Figuren 1 bis 3 zeigen, ist der Schaft 11 des Innenteils 10 noch mit mehreren Radialnuten 18 versehen, die an der Außenseite in den Schaft 11 eingearbeitet sind und im Abstand zueinander stehen. Die Figuren zeigen außerdem, dass das Innenteil 10 an der dem Kopf 13 gegenüberliegenden Seite mit einem Sicherungsring 19 versehen ist, damit die auf den Schaft 11 aufgesetzte Außenhülse 12 gegen ein Herunterfallen gesichert ist. Diese ist aufgrund der form- und materialfedernden Eigenschaften von Kunststoffen deformierbar, so dass die Außenhülse 12 auf das Innenteil 10 gestülpt werden kann.

Wie die Figuren 1 und 2 zeigen, ist das Innenteil 10 im Bereich des Kopfes 13 noch mit zwei einander diametral gegenüberliegenden, schlitzartigen Öffnungen 20 versehen, durch die zur Verklebung des Kopfes 13 Klebstoff austritt.

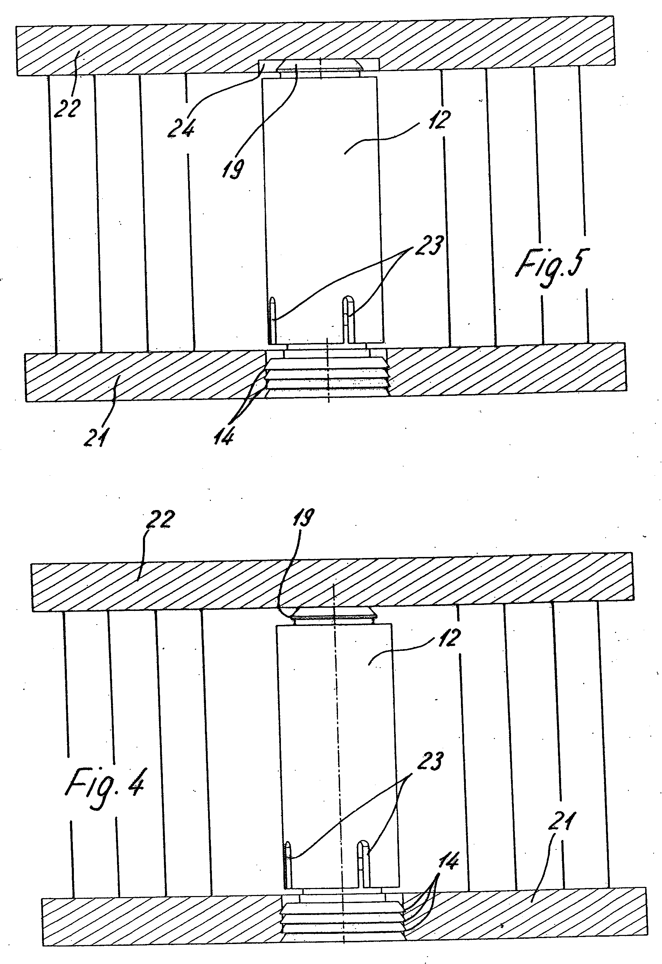

Die Figuren 4 bis 6 zeigen die Anordnungen von einer Leichtbauplatte mit den Deckschichten 21, 22 und einen dazwischen angeordneten Verbindungseinsatz. Dazu wird die Außenhülse 12 auf den Schaft 11 des Innenteils 10 geschoben. Der Klebstoff kann dann in den Abschnitt 15a des Klebstoffzuführkanals 15 eingepresst werden, durchtritt die radialen Klebstoffaustrittsöffnungen 16, 17 und verteilt sich dann in den Ringspalt 25 zwischen der Innenfläche der Außenhülse 12 und der Außenfläche des Schaftes 11. In einem Endbereich der Außenhülse 12 angeordnete Schlitze gewährleisten den Austritt des Klebstoffes, der dadurch gezielt Kontakt mit den Deckschichten der Leichtbauplatten bekommt. Zur Verrastung der Außenhülse 12 mit dem Schaft 11 ist die Außenhülse 12 an der dem Kopf 13 des Innenteils 10 zugeordneten Seite mit in Längsrichtung verlaufenden Schlitzen 23 ausgestattet.

Bei der Ausführung nach der Figur 4 stützt sich der Sicherungsring 19 auf der zugeordneten Fläche der Deckschicht 22 ab, während bei der Ausführung gemäß der Figur 5 die Deckschicht 22 mit einer Ausnehmung 24 versehen ist, in die der Sicherungsring 19 eingreift. Die Figuren 4 und 5 zeigen, dass sich die Harpunenstege 14 des Kopfes 13 in das die Bohrung begrenzende Material der Deckschicht 21 einfressen. Zusätzlich erfolgt die Sicherung noch durch die Verklebung.

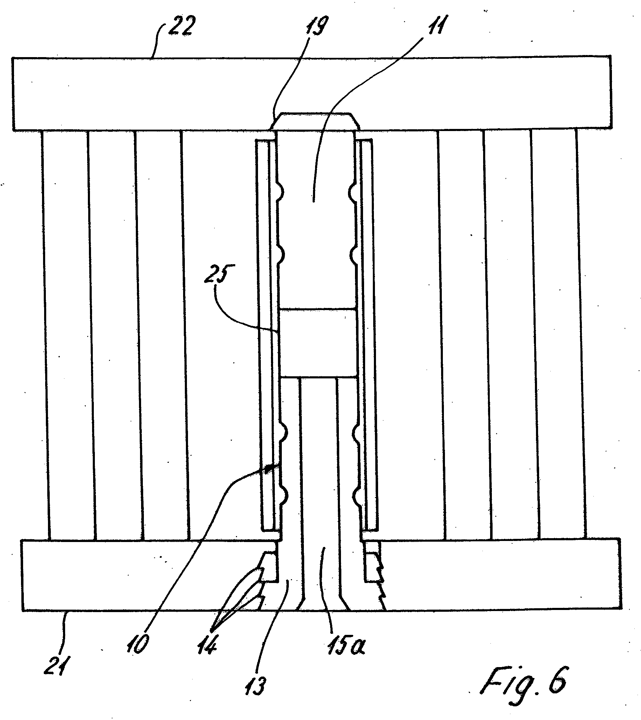

Die Figur 6 zeigt die Anordnungen gemäß den Figuren 4 und 5 im aufgeschnitten Zustand. Aus dieser Figur ist ersichtlich, dass zwischen der Außenfläche des Schaftes 11 und der Innenfläche der Außenhülse 12 ein Ringspalt 25 gebildet ist, in dem der Klebstoff verläuft und sich auf den Innenseiten der Deckschichten 21, 22 absetzt.

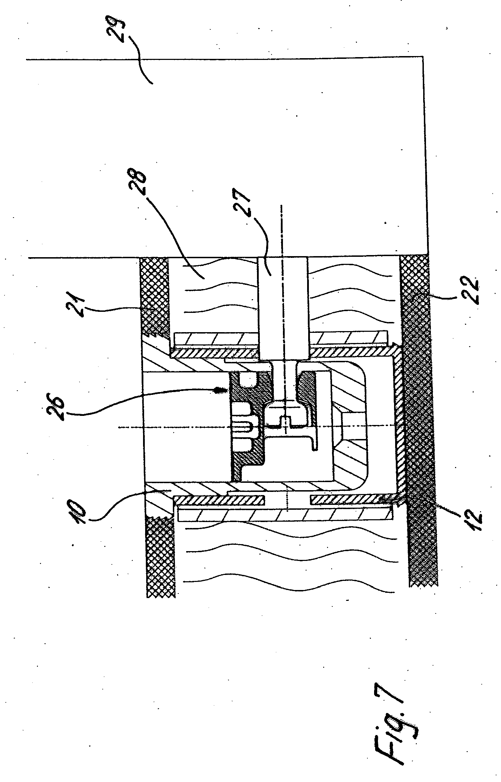

Die Figur 7 zeigt eine Variante zur Festlegung eines Eckverbindungsbeschlages in einer Leichtbauplatte. Das Innenteil 10 und die Außenhülse 12 sind jeweils topfförmig ausgebildet. Die Klebstoffführung ist analog zu den Ausführungen gemäß den Figuren 1 bis 6 und nicht näher dargestellt. Zusätzlich erfolgt die Verspannung über einen Exzenterbeschlag 26, der allgemein bekannt ist. Es wird außerdem ein Dübel 27 in eine Bohrung einer Platte 28 eingesetzt, die wiederum an einem weiteren Bauteil 30 festgelegt ist.

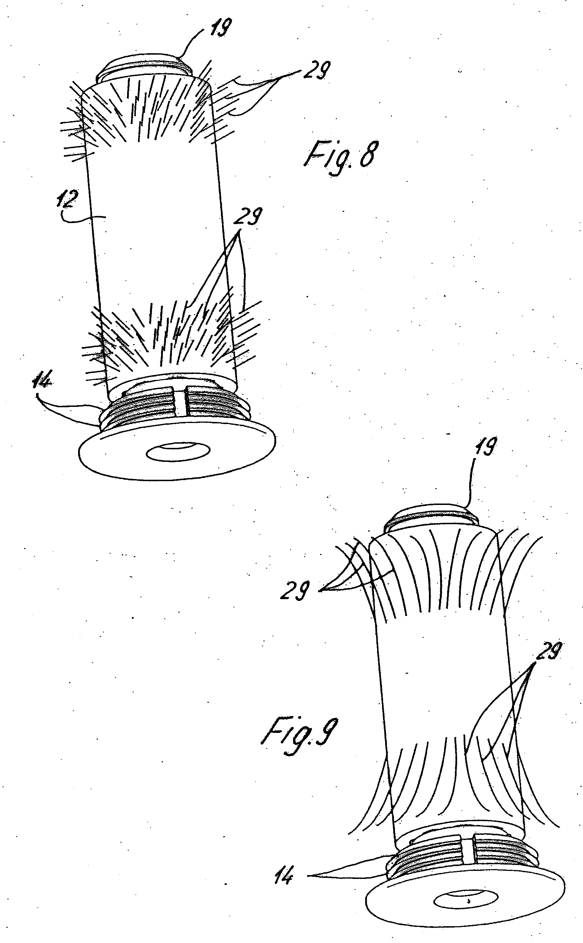

Die Figuren 8 bis 10 zeigen Ausführungen, bei denen auf die Außenfläche der Außenhülse 12 Rückhalteelemente 29 in Form von Borsten, Streifen oder dergleichen aufgesetzt sind. Es ergibt sich aus den Figuren, dass der Klebstoff in die Endbereiche der Außenhülse 12 durch den Druck gepresst wird. Nach Abbau dieses Druckes könnte der Klebstoff zurückfließen, wenn auch nur zum Teil und nur um einen relativ geringen Betrag. Um dieses zu verhindern, sind bei der Ausführung nach der Figur 8 in den Endbereichen der Außenhülse 12 im wesentlichen radial verlaufende Rückhalteelemente 29 aufgesetzt. Auch bei der Ausführung nach der Figur 9 sind die Rückhaltelemente 29 in den Endbereichen festgesetzt. Bei dieser Ausführung verlaufen zumindest die der Außenfläche der Außenhülse 12 zugewandten Endbereiche tangential oder annähernd tangential.

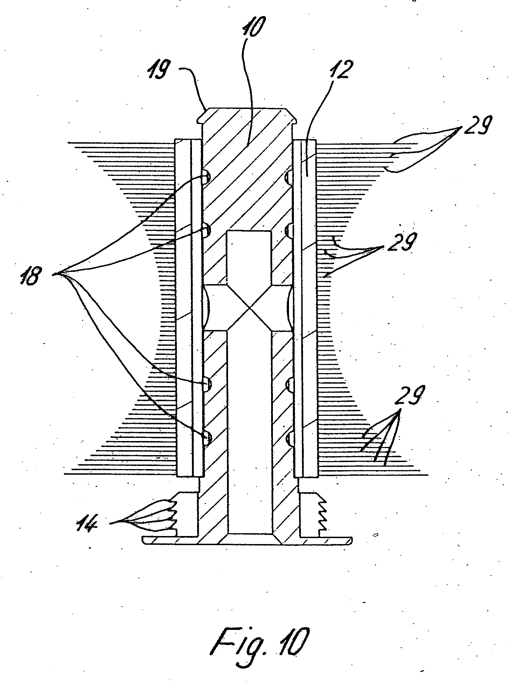

Bei der Ausführung nach der Figur 10 sind die Rückhaltelemente 29 im wesentlichen über die gesamte Länge und auch über den gesamten Umfang der Außenhülse 12 verteilt. Sie stehen wieder radial zur Mittellängsachse der Außenhülse 12, wobei sich jedoch, in einem Längsschnitt, eine konkave Form der Außenkontur ergibt, da die Längen der Rückhaltelemente 29 vom mittleren Bereich her bis zu den Endbereichen kontinuierlich zunehmen. Die Rückhaltelemente 29 sind in bevorzugter Ausführung Borsten, die beispielsweise aus einem Kunststoff bestehen.

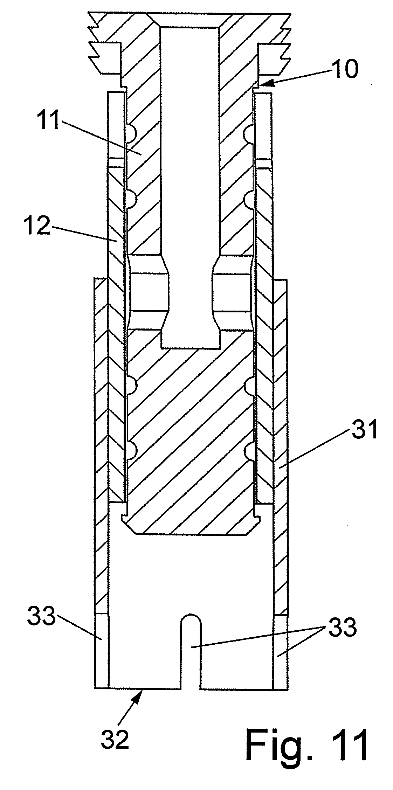

In Figur 11 ist ein Ausführungsbeispiel der Erfindung dargestellt, bei dem im Gegensatz zu den bisher beschriebenen Konstruktionen die wirksame Länge des Verbindungseinsatzes veränderbar ist.

Dies wird erreicht durch eine Verlängerungshülse 31, welche teleskopartig verschiebbar über die Außenhülse 12 gesteckt ist. Der übrige Aufbau des Verbindungseinsatzes gemäß dem Ausführungsbeispiel nach Figur 11 entspricht grundsätzlich den bisher beschriebenen Varianten, d.h., dass auf den Schaft 11 eines Innenteiles 10 mit einem Klebstoffzuführkanal 15 die schon erwähnte Außenhülse 12 aufgesetzt ist.

Wie erwähnt, wird auf diese Außenhülse 12 die teleskopartig verschiebbare Verlängerungshülse 31 aufgeschoben, die in axialer Richtung der gesamten Anordnung relativ zur Außenhülse 12 verschiebbar ist, wodurch die Gesamtlänge des Verbindungseinsatzes auf einfache Art und Weise verändert werden und an verschiedene Dicken von Leichtbauplatten angepasst werden kann.

Die Verlängerungshülse 31 ist an ihrem freien, stirnseitigen Ende 32 mit axial verlaufenden Schlitzen 33 ausgestattet, durch welche Klebstoff nach außen treten kann.

Abweichend hiervon kann die Verlängerungshülse 31 im stirnseitigen Bereich aber auch mit Klebstoffaustrittsbohrungen versehen sein, ebenso ist es denkbar, die Stirnfläche der Verlängerungshülse 31 wellenförmig auszubilden oder mit einer Stirnverzahnung zu versehen, um einen Klebstoffaustritt zu ermöglichen.

Die Erfindung ist nicht auf die dargestellten Ausführungsbeispiele beschränkt. Wesentlich ist, dass der Verbindungseinsatz mehrteilig, vorzugsweise zweiteilig ausgebildet ist und aus dem Innenteil 10 und der Außenhülse 12 gebildet wird. Darüber hinaus ist von Bedeutung, dass die Klebstoffführung durch den Klebstoffzuführkanal 15, die Klebstoffaustrittsöffnungen 16, 17, durch die Radialnuten 18 und durch den Ringspalt 25 exakt vorgegeben ist.

### Bezugszeichen

- 10: Innenteil
- 11: Schaft
- 12: Außenhülse
- 13: Kopf
- 14: Harpunenstege
- 15: Klebstoffzuführkanal
- 15a, 15b: Abschnitte
- 16, 17: Klebstoffaustrittsöffnungen
- 18: Radialnuten
- 19: Sicherungsring
- 20: Öffnungen
- 21,22: Deckschichten
- 23: Schlitze
- 24: Ausnehmung
- 25: Ringspalt
- 26: Exzenterbeschlag
- 27: Dübel
- 28: Platte
- 29: Rückhalteelemente
- 30: Bauteil
- 31: Verlängerungshülse
- 32: Ende
- 33: Schlitz

## Patentansprüche

1. Anordnung mit einer Leichtbauplatte, die einen weichen Innenkern und harte Deckplatten aufweist, und einem Verbindungseinsatz, welcher mit einem zentrischen Klebstoffzuführkanal(15) und mit quer dazu stehenden Austrittöffnungen (16, 17) versehen ist, **dadurch gekennzeichnet, dass** der Verbindungseinsatz mehrteilig ausgebildet ist, und ein den Klebstoffzuführkanal (15) aufweisendes Innenteil (10) und eine in eine Bohrung eines Bauteiles zumindest teilweise einsetzbare Außenhülse (12) aufweist.

2. Anordnung nach Anspruch 1, **dadurch gekennzeichnet, dass** der Verbindungseinsatz ausschließlich aus dem Innenteil (10) und der Außenhülse (12) besteht.

3. Anordnung nach Anspruch 1 oder 2, **dadurch gekennzeichnet, dass** das Innenteil (10) zumindest an einem Ende einen Kopf (13) aufweist, der zumindest teilweise form- und/oder kraftschlüssig in eine Bohrung oder Ausnehmung eines Bauteils einsetzbar ist.

4. Anordnung nach Anspruch 3, **dadurch gekennzeichnet, dass** der Kopf (13) des Innenteils (10) profiliert ist.

5. Anordnung nach Anspruch 4, **dadurch gekennzeichnet, dass** die Umfangsfläche des Kopfes (13) Harpunenstege (14) aufweist.

6. Anordnung nach Anspruch 5, **dadurch gekennzeichnet, dass** die Harpunenstege (14) umlaufend, über Teilbereiche sich erstreckend oder in Richtung der Mittellängsachse des Innenteils (10) verlaufend am Kopf (13) angeordnet sind.

7. Anordnung nach Anspruch 1, **dadurch gekennzeichnet, dass** zwischen der Innenfläche der Außenhülse (12) und der Außenfläche des Innenteils (10) ein Ringspalt (25) vorgesehen ist.

8. Anordnung nach Anspruch 3, **dadurch gekennzeichnet, dass** der Kopf (13) des Innenteils (10) mit wenigstens einer, vorzugsweise mit zwei diametral einander gegenüberliegenden Klebstoffaustrittsöffnungen (20) versehen ist.

9. Anordnung nach Anspruch 8, **dadurch gekennzeichnet, dass** die Klebstoffaustrittsöffnungen (20) schlitzartig in Längsrichtung des Innenteils (10) verlaufend ausgebildet sind.

10. Anordnung nach Anspruch 1, **dadurch gekennzeichnet, dass** das Innenteil (10) an der Umfangsfläche mehrere im Abstand zueinander verlaufende Radialnuten (18) und/oder in Richtung der Mittellängsachse verlaufendende Nuten aufweist.

11. Anordnung nach Anspruch 3, **dadurch gekennzeichnet, dass** das Innenteil (10) außerhalb des Kopfes (13) mit wenigstens einer Klebstoffaustrittsöffnung, vorzugsweise mit zwei einander diametral gegenüberliegenden Klebstoffaustrittsöffnungen (16, 17) versehen ist.

12. Anordnung nach Anspruch 11, **dadurch gekennzeichnet, dass** die Klebstoffaustrittsöffnungen (16, 17) im mittleren Bereich des Schaftes (11) des Innenteils (10) angeordnet sind.

13. Anordnung nach einem oder mehreren der vorhergehenden Ansprüche 1 bis 12, **dadurch gekennzeichnet, dass** der Klebstoffzuführkanal (15) in zwei Abschnitte (15a, 15b) unterteilt ist, und dass nur ein Abschnitt bis in den Bereich der radial verlaufenden Klebstoffaustrittsöffnungen (16, 17) sich erstreckt.

14. Anordnung nach einem oder mehreren der vorhergehenden Ansprüche 1 bis 13, **dadurch gekennzeichnet, dass** das Innenteil (10) an der dem Kopf (13) abgewandten Seite mit einem Sicherungsring (19) versehen ist.

15. Anordnung nach einem oder mehreren der vorhergehenden Ansprüche 1 bis 14, **dadurch gekennzeichnet, dass** die Innenfläche der Außenhülse (12) als Profilierung ausgebildet ist, die aus in Längsrichtung verlaufenden Vertiefungen und Erhöhungen gebildet ist.

16. Anordnung nach einem oder mehreren der vorhergehenden Ansprüche 1 bis 15, **dadurch gekennzeichnet, dass** die Außenhülse (12) in dem dem Kopf (13) des Innenteils (10) zugewandten Endbereich mit mehreren Schlitzen (23) versehen ist.

17. Anordnung nach Anspruch 1, **dadurch gekennzeichnet, dass** die Außenhülse (12) an der Außenfläche zumindest in den Endbereichen mit flexiblen Rückhalteelementen (29) für den Klebstoff versehen ist.

18. Anordnung nach Anspruch 17, **dadurch gekennzeichnet, dass** die Rückhaltelemente (29) in dem der Außenfläche der Außenhülse (12) zugewandten Endbereichen radial und/oder tangential zur Außenfläche der Außenhülse (12) verlaufen.

19. Anordnung nach Anspruch 17, **dadurch gekennzeichnet, dass** die Rückhaltelemente (29) radial zur Mittellängsachse der Außenhülse (12) angeordnet sind und sich über die gesamte oder annähernd über die gesamte Länge und über den gesamten Umfang erstrecken.

20. Anordnung nach Anspruch 19, **dadurch gekennzeichnet, dass** die Längen der Rückhalteelemente (29) sich vom mittleren Bereich bis hin zu den Endbereichen der Außenhülse (12) vergrößern, vorzugsweise kontinuierlich vergrößern.

21. Anordnung nach einem oder mehreren der vorhergehenden Ansprüche 17 bis 20, **dadurch gekennzeichnet, dass** die Rückhaltelemente (29) als Borsten, Streifen oder dergleichen ausgebildet sind und sich über den jeweiligen Bereich über den gesamten Umfang verteilen.

22. Anordnung nach einem oder mehreren der vorhergehenden Ansprüche 1 bis 21, **dadurch gekennzeichnet, dass** die Außenhülse (12) mit mehreren kreisrunden oder von der Kreisform abweichenden Öffnungen versehen ist.

23. Anordnung nach einem oder mehreren der vorhergehenden Ansprüche 1 bis 22, **dadurch gekennzeichnet, dass** der Klebstoffzuführkanal(15) mittels eines Siebes, eines Lochbleches oder dergleichen abgedeckt ist.

24. Anordnung nach Anspruch 1, **dadurch gekennzeichnet, dass** das Innenteil (10) und die Außenhülse (12) jeweils topfförmig ausgebildet sind, und dass der daraus gebildete Verbindungseinsatz mittels eines Exzenterbeschlages (26) an einem Bauteil festlegbar ist.

25. Anordnung nach Anspruch 1, **dadurch gekennzeichnet, dass** auf die Außenhülse (12) eine gegenüber dieser teleskopartig verschiebbare Verlängerungshülse (31) aufgeschoben ist.

26. Anordnung nach Anspruch 25, **dadurch gekennzeichnet, dass** die Verlängerungshülse (31) im Bereich ihrer freien Stirnseite (32) mit axial verlaufenden Schlitzen (33) versehen, wellenförmig ausgebildet oder mit einer Stirnverzahnung versehen ist.

## Claims

1. Arrangement comprising a lightweight board having a soft inner core and hard cover boards, and a connection insert provided with a central adhesive supply channel (15) and with outlet openings (16, 17) disposed transversely thereto, **characterized in that** the connection insert is constructed in several parts and has an inner part (10) having the adhesive supply channel (15) and an outer sleeve (12) which can be at least partially inserted into a borehole of a component.

2. Arrangement according to claim 1, **characterized in that** the connection insert consists exclusively of the inner part (10) and the outer sleeve (12).

3. Arrangement according to claim 1 or 2, **characterized in that** the inner part (10) has a head (13) at least on one end, which head (13) can be inserted at least partially form-lockingly and/or force-lockingly in a borehole or a recess of a component.

4. Arrangement according to claim 3, **characterized in that** the head (13) of the inner part (10) is profiled.

5. Arrangement according to claim 4, **characterized in that** the circumferential surface of the head (13) has harpoon-type webs (14).

6. Arrangement according to claim 5, **characterized in that**, at the head (13), the harpoon-type webs (14) are arranged in a surrounding manner, extending over partial regions or extending in the direction of the longitudinal center axis of the inner part (10).

7. Arrangement according to claim 1, **characterized in that** an annular gap (25) is provided between the inside surface of the outer sleeve (12) and the outside surface of the inner part (10).

8. Arrangement according to claim 3, **characterized in that** the head (13) of the inner part (10) is provided with at least one, preferably with two diametrically mutually opposite adhesive outlet openings (20).

9. Arrangement according to claim 8, **characterized in that** the adhesive outlet openings (20) are constructed in a slot-type manner extending in the longitudinal direction of the inner part (10).

10. Arrangement according to claim 1, **characterized in that**, on the circumferential surface, the inner part (10) has several radial grooves (18) extending in a mutually spaced manner and/or grooves extending in the direction of the longitudinal center axis.

11. Arrangement according to claim 3, **characterized in that**, outside the head (13), the inner part (10) is provided with at least one adhesive outlet opening, preferably with two mutually diametrically opposite adhesive outlet openings (16, 17).

12. Arrangement according to claim 11, **characterized in that** the adhesive outlet openings (16, 17) are arranged in the central region of the shaft (11) of the inner part (10).

13. Arrangement according to one or more of the preceding claims 1 to 12, **characterized in that** the adhesive supply channel (15) is divided into two sections (15a, 15b), and **in that** only one section extends into the region of the radially extending adhesive outlet openings (16, 17).

14. Arrangement according to one or more of the preceding claims 1 to 13, **characterized in that**, on the side facing away from the head (13), the inner part (10) is equipped with a locking ring (19).

15. Arrangement according to one or more of the preceding claims 1 to 14, **characterized in that** the inside surface of the outer sleeve (12) is constructed as a profiling which is formed of indentations and elevations extending in the longitudinal direction.

16. Arrangement according to one or more of the preceding claims 1 to 15, **characterized in that** the outer sleeve (12) is provided with several slots (23) in the end region facing the head (13) of the inner part (10).

17. Arrangement according to claim 1, **characterized in that**, on the outside surface, the outer sleeve (12) is equipped at least in the end regions with flexible retaining elements (29) for the adhesive.

18. Arrangement according to claim 17, **characterized in that** the retaining elements (29) extend in the end regions facing the outside surface of the outer sleeve (12) radially and/or tangentially with respect to the outside surface of the outer sleeve (12).

19. Arrangement according to claim 17, **characterized in that** the retaining elements (29) are arranged radially with respect to the longitudinal center axis of the outer sleeve (12) and extend over the entire length or approximately over the entire length and over the entire circumference.

20. Arrangement according to claim 19, **characterized in that** the lengths of the retaining elements (29) increase, preferably continuously, from the central region to the end regions of the outer sleeve (12).

21. Arrangement according to one or more of the preceding claims 17 to 20, **characterized in that** the retaining elements (29) are constructed as bristles, strips or the like and are distributed over the respective region along the entire circumference.

22. Arrangement according to one or more of the preceding claims 1 to 21, **characterized in that** the outer sleeve (12) is provided with several circular openings or openings deviating from the circular shape.

23. Arrangement according to one or more of the preceding claims 1 to 22, **characterized in that** the adhesive supply channel (15) is covered by means of a sieve, a perforated plate, or the like.

24. Arrangement according to claim 1, **characterized in that** the inner part (10) and the outer sleeve (12) each have a cup-shaped construction, and **in that** the connection insert formed thereof can be fixed to a component by means of an eccentric fitting (26).

25. Arrangement according to claim 1, **characterized in that** an extension sleeve (31), which can be telescopically displaced with respect to the outer sleeve (12), is pushed onto the outer sleeve (12).

26. Arrangement according to claim 25, **characterized in that**, in the region of its free front side (32), the extension sleeve (31) is provided with axially extending slots (33), has a wavy construction or is provided with radial serrations.

## Revendications

1. Dispositif comprenant un panneau de construction léger comportant un noyau interne mou et des plaques de recouvrement dures, ainsi qu'un insert de liaison qui est équipé d'un canal d'entrée d'un adhésif (15) médian et d'ouvertures de sortie (16, 17) situées transversalement à celui-ci,
**caractérisé en ce que**
l'insert de liaison est réalisé en plusieurs parties et comprend une partie interne (10) comprenant le canal d'entrée de l'adhésif (15) ainsi qu'un manchon externe (12) pouvant être introduit au moins partiellement dans un perçage d'un élément de construction.

2. Dispositif conforme à la revendication 1,
**caractérisé en ce que**
l'insert de liaison est exclusivement constitué par la partie interne (10) et le manchon externe (12).

3. Dispositif conforme à la revendication 1 ou 2,
**caractérisé en ce que**
la partie interne (10) comporte au moins à une extrémité une tête (13) qui peut être introduite au moins partiellement par une liaison par la forme et/ou par la force dans un perçage ou un évidement d'un élément de construction.

4. Dispositif conforme à la revendication 3,
**caractérisé en ce que**
la tête (13) de la partie interne (10) est profilée.

5. Dispositif conforme à la revendication 4,
**caractérisé en ce que**
la surface périphérique de la tête (13) comporte des barrettes formant harpons (14).

6. Dispositif conforme à la revendication 5,
**caractérisé en ce que**
les barrettes formant harpons (14) sont disposées autour de la tête (13) s'étendent sur des zones partielles ou en direction de l'axe longitudinal médian de la partie interne (10).

7. Dispositif conforme à la revendication 1,
**caractérisé en ce qu'**
une fente annulaire (25) est située entre la surface interne du manchon externe (12) et la surface externe de la partie interne (10).

8. Dispositif conforme à la revendication 3,
**caractérisé en ce que**
la tête (13) de la partie interne (10) est équipée d'au moins une et de préférence de deux ouvertures de sortie d'adhésif (20), diamétralement opposées l'une par rapport à l'autre.

9. Dispositif conforme à la revendication 8,
**caractérisé en ce que**
les ouvertures de sortie d'adhésif (20) sont réalisées de façon à s'étendre en forme de fente dans la direction longitudinale de la partie interne (10).

10. Dispositif conforme à la revendication 1,
**caractérisé en ce que**
la partie interne (10) comprend, sur sa surface périphérique, plusieurs rainures radiales (18) s'étendant à distance les unes des autres et/ou des rainures s'étendant en direction de l'axe longitudinal médian.

11. Dispositif conforme à la revendication 3,
**caractérisé en ce que**
la partie interne (10) est équipée, à l'extérieur de la tête (13) d'au moins une ouverture de sortie d'adhésif, et de préférence, de deux ouvertures de sortie d'adhésif (16, 17) diamétralement opposées.

12. Dispositif conforme à la revendication 11,
**caractérisé en ce que**
les ouvertures de sortie d'adhésif (16, 17) sont situées dans la zone médiane de la tige (11) de la partie interne (10).

13. Dispositif conforme à l'une ou à plusieurs des revendications précédentes 1 à 12,
**caractérisé en ce que**
le canal d'entrée d'adhésif (15) est subdivisé en deus segments (15a, 15b), et uniquement un segment s'étend jusque dans la zone des ouvertures de sortie d'adhésif (16, 17) s'étendant radialement.

14. Dispositif conforme à l'une ou à plusieurs des revendications précédentes 1 à 13,
**caractérisé en ce que**
la partie interne (10) est équipée d'une bague de protection (19) sur son côté situé à l'opposé de la tête (13).

15. Dispositif conforme à l'une ou à plusieurs des revendications précédentes 1 à 14,
**caractérisé en ce que**
la surface interne du manchon externe (12) est réalisée sous la forme d'un profilé qui est formé de cavités et de bossages s'étendant en direction longitudinale.

16. Dispositif conforme à l'une ou à plusieurs des revendications précédentes 1 à 15,
**caractérisé en ce que**
le manchon externe (12) est équipé de plusieurs fentes (23) dans sa zone d'extrémité tournée vers la tête (13) de la partie interne (10).

17. Dispositif conforme à la revendication 1,
**caractérisé en ce que**
le manchon externe (12) est équipé sur sa surface externe, au moins dans ses zones d'extrémité, d'éléments de retenue flexibles (29) de l'adhésif.

18. Dispositif conforme à la revendication 17,
**caractérisé en ce que**
les éléments de retenue (29) s'étendent, radialement et/ou tangentiellement par rapport à la surface externe du manchon externe (12) dans les zones d'extrémité, tournées vers la surface externe de ce manchon externe (12).

19. Dispositif conforme à la revendication 17,
**caractérisé en ce que**
les éléments de retenue (29) sont situés radialement par rapport à l'axe longitudinal médian du manchon externe (12) et s'étendent sur la totalité ou approximativement sur la totalité de sa longueur et sur la totalité de sa périphérie.

20. Dispositif conforme à la revendication 19,
**caractérisé en ce que**
les longueurs des éléments de retenue (29) augmentent de préférence de manière continue de la zone médiane jusqu'aux zones d'extrémité du manchon externe (12).

21. Dispositif conforme à l'une ou à plusieurs des revendications précédentes 17 à 20,
**caractérisé en ce que**
les éléments de retenue (29) sont réalisés sous la forme de poils de bandes ou similaires et sont répartis sur des zones respectives sur la totalité de la périphérie.

22. Dispositif conforme à l'une ou à plusieurs des revendications précédentes 1 à 21,
**caractérisé en ce que**
le manchon externe (12) est équipé de plusieurs ouvertures circulaires ou ayant une forme différente de la forme circulaire.

23. Dispositif conforme à l'une ou à plusieurs des revendications précédentes 1 à 22,
**caractérisé en ce que**
le canal d'entrée d'adhésif (15) est recouvert d'un tamis, d'une tôle perforée ou similaire.

24. Dispositif conforme à la revendication 1,
**caractérisé en ce que**
la partie interne (10) et le manchon externe (12) sont respectivement réalisés en forme de pot et l'insert de liaison ainsi formé peut être fixé à un élément de construction au moyen d'une garniture excentrique (26).

25. Dispositif conforme à la revendication 1,
**caractérisé en ce que**
sur le manchon externe (12) est emmanché un manchon de prolongement (31) coulissant de façon télescopique par rapport à celui-ci.

26. Dispositif conforme à la revendication 25,
**caractérisé en ce que**
le manchon de prolongement (31) est équipé dans la zone de sa face frontale libre (32), de fentes (33) s'étendant axialement, est réalisé de façon ondulée ou est équipé d'une denture frontale.
